# DEMANDE DE BREVET EUROPEEN

(11) **EP 4 007 291 A1**
(43) Date de publication de la demande: **01.06.2022**
(21) Numéro de dépôt: 20210359.4
(22) Date de dépôt: 27.11.2020
(51) Int. Cl.: H04Q 9/00

(54) **PROCÉDÉ DE CONTRÔLE POUR LA MISE EN OEUVRE D'UN SYSTÈME DE COMMUNICATION POUR UN COMPTEUR ÉLECTRIQUE, PROGRAMME D'ORDINATEUR ET DISPOSITIF ÉLECTRONIQUE ASSOCIÉS**

(71) Demandeur: TOTAL DIRECT ENERGIE, 75015 Paris (FR)
(72) Inventeur: GREGOIRE, Tony, 75013 PARIS (FR); DUPERRY, Louis, 75017 PARIS (FR); JAMIN, Caroline, 75006 PARIS (FR); JEANNEY, Remi, 92130 ISSY-LES-MOULINEAUX (FR)
(74) Mandataire: Lavoix

(57) **Abrégé**

Procédé de contrôle pour mettre en œuvre un système de communication à connecter à un compteur électrique (2) pour transmettre à un utilisateur des données issues dudit compteur via un réseau Wi-Fi, ledit procédé étant exécuté par un dispositif électronique de contrôle (3) comprenant un capteur d'images (32) et comprenant :
connexion au réseau Wi-Fi ;
fourniture à l'utilisateur d'une requête de capture d'une image du compteur électrique ;
sur réception d'une commande en provenance de l'utilisateur, déclenchement d'une capture d'image par le capteur d'image et d'une détermination d'au moins une valeur indiquant une qualité courante de la connexion Wi-Fi (5);
délivrance à l'utilisateur d'une indication de poursuite de la mise en œuvre dudit système de communication, ou alternativement d'une indication de l'impossibilité de la poursuite d'une telle mise en œuvre, en fonction du résultat d'une comparaison entre ladite qualité déterminée et un seuil de qualité prédéterminé.

## Description

La présente invention concerne le domaine de la mise en œuvre d'un système de communication pour un compteur électrique, ledit système de communication étant adapté pour être connecté au compteur électrique et pour transmettre à un utilisateur des données issues du compteur électrique via un réseau de télécommunications sans fil.

Le système de communication est typiquement un système de communication ERL (pour Emetteur Radio Linky), le compteur électrique étant un compteur électrique Linky^{™} de la société ENEDIS équipé d'une interface TIC (pour Télé-Information Client) via laquelle sont issues les données aptes à être transmises par le système de communication.

On connaît du document FR 3 058 006 B1 un système de communication du type précité. Le système de communication est un système de communication ERL couplé à un compteur électrique Linky^{™} via une interface TIC. Le système de communication comprend un dispositif d'alimentation électrique pour alimenter un dispositif de communication apte à émettre des données, telles que des données de consommation électrique, issues du compteur électrique. Le dispositif d'alimentation électrique comprend une source de tension qui est régulable en tension via un signal de régulation, et un dispositif de rétroaction délivrant ledit signal de régulation de manière à maintenir une puissance source délivrée par la source de tension autour d'une puissance source de référence. Le dispositif d'alimentation électrique comprend également une alimentation tampon alimentée par la source de tension et délivrant une puissance tampon contribuant à la puissance de sortie fournie par le dispositif d'alimentation électrique, au moins quand ladite puissance de sortie est supérieure à la puissance source de référence.

Toutefois, un tel système de communication, comportant un module d'émission et de réception de télécommunication sans fil, requiert, pour fonctionner nominalement de pouvoir établir une liaison de télécommunication sans fil d'une qualité suffisante pour l'échange des données avec l'utilisateur ou avec un serveur distant.

A cet effet, l'invention a pour objet un procédé de contrôle pour la mise en œuvre d'un système de communication pour un compteur électrique, ledit système de communication étant adapté pour être connecté au compteur électrique et pour transmettre à un utilisateur des données issues du compteur électrique via un réseau de télécommunications sans fil, ledit procédé étant exécuté par un dispositif électronique de contrôle comprenant un capteur d'images et étant caractérisé en ce qu'il comprend les étapes suivantes :
connexion du dispositif électronique de contrôle au réseau de télécommunication sans fil ;
fourniture à l'utilisateur, via le dispositif électronique de contrôle, d'une requête de capture d'une image du compteur électrique ;
sur réception d'une commande de capture d'image en provenance de l'utilisateur par le dispositif électronique de contrôle, déclenchement d'une capture d'image par le capteur d'image et d'une détermination, par le dispositif électronique de contrôle, d'au moins une valeur indiquant une qualité courante de la connexion avec le réseau de télécommunication sans fil ;
délivrance à l'utilisateur, par le dispositif électronique de contrôle, d'une indication de poursuite de la mise en œuvre dudit système de communication, ou alternativement d'une indication de l'impossibilité de la poursuite d'une telle mise en œuvre, en fonction du résultat d'une comparaison entre ladite qualité déterminée et un seuil de qualité prédéterminé.

Un procédé de contrôle selon l'invention permet de déterminer l'éligibilité ou non de l'utilisateur quant à l'installation d'un système de communication sur son compteur électrique, relativement à la possibilité d'établir une liaison sans fil permettant la transmission des données de consommation notamment.

Suivant d'autres aspects de l'invention, le procédé de pilotage comprend une ou plusieurs des caractéristiques suivantes, prises isolément ou suivant toutes les combinaisons techniquement possibles :
le procédé comprend la comparaison entre ladite qualité déterminée et un seuil de qualité prédéterminé ;
ladite capture d'image par le capteur d'image et ladite détermination de qualité courante de connexion sont déclenchées simultanément ;
ladite image capturée et ladite qualité déterminée sont transmises par ledit dispositif électronique de contrôle à destination d'un serveur central pour stockage de ladite image en correspondance de ladite qualité ;
la connexion du dispositif électronique de contrôle au réseau de télécommunication sans fil comprend une connexion selon la norme Wi-Fi à un réseau local et la détermination de la qualité courante de la connexion avec le réseau de télécommunication sans fil comprend la détermination de la qualité courante de ladite connexion selon la norme Wi-Fi ;
la délivrance à l'utilisateur, par le dispositif électronique de contrôle, de l'indication de poursuite de la mise en œuvre dudit système de communication, ou alternativement d'une indication de l'impossibilité de la poursuite d'une telle mise en œuvre, est en outre fonction d'un niveau de zoom utilisé pour la capture d'image. L'invention a également pour objet un programme d'ordinateur comportant des instructions logicielles qui, lorsqu'elles sont exécutées par un ordinateur, mettent en œuvre un procédé de contrôle, tel que défini ci-dessus.

L'invention a également pour objet un dispositif électronique de contrôle pour la mise en œuvre d'un système de communication pour un compteur électrique, ledit système de communication étant adapté pour être connecté au compteur électrique et pour transmettre à un utilisateur des données issues du compteur électrique via un réseau de télécommunications sans fil, ledit dispositif électronique de contrôle comprenant un capteur d'images, une interface homme-machine et un module d'émission et de réception de télécommunication sans fil adapté pour se connecter à un réseau de télécommunication sans fil, ledit dispositif électronique de contrôle étant adapté pour fournir à l'utilisateur, via l'interface homme-machine, une requête de capture d'une image du compteur électrique et pour, sur réception via l'interface homme-machine, d'une commande de capture d'image en provenance de l'utilisateur, déclencher une capture d'image par le capteur d'image et déterminer une qualité courante de la connexion avec le réseau de télécommunication sans fil avec lequel le dispositif électronique de contrôle est connecté ; ledit dispositif électronique de contrôle étant adapté pour délivrer à l'utilisateur une indication de poursuite de la mise en œuvre dudit système de communication, ou alternativement une indication de l'impossibilité de la poursuite d'une telle mise en œuvre, en fonction du résultat d'une comparaison entre ladite qualité déterminée et un seuil de qualité prédéterminé.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une vue schématique d'une installation électronique selon l'invention ;
[Fig 2] la figure 2 est un organigramme d'un procédé, selon l'invention, de contrôle pour la mise en œuvre d'un système de communication pour un compteur électrique.

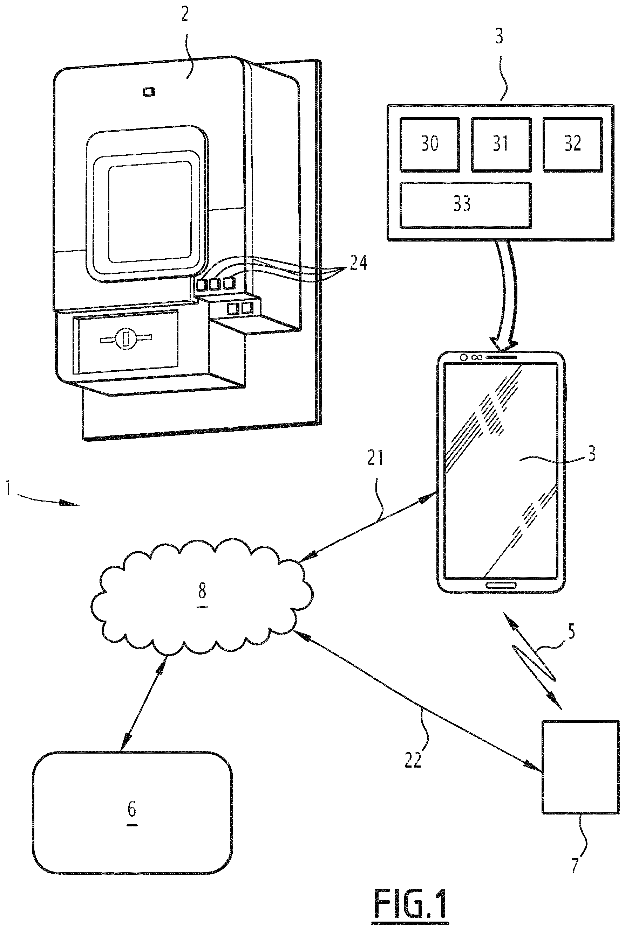

Sur la figure 1, une plate-forme électronique 1 pour l'installation d'un système de communication (non représenté) sur un compteur électrique comprend un compteur électrique 2, un dispositif électronique 3 de contrôle et un réseau de télécommunication comprenant au moins une section sans fil.

Dans le cas considéré, la section de réseau de télécommunication sans fil comprend un réseau sans fil selon la norme Wi-Fi établi par une passerelle 7 (ou « box ») Internet.

La box Internet 7 comprend un modem connecté au réseau internet 8 par une liaison 22, par exemple filaire, et un bloc Wi-Fi pour échanger des données conformément aux normes ISO/CEI 8802-11, ladite box 7 étant adaptée pour effectuer les conversions de protocole pour permettre la transmission de données entre le réseau Internet et le réseau Wi-Fi.

Le compteur électrique 2 est connu en soi, et comporte de préférence une interface de connexion 24 pour la connexion du système de communication dont l'installation est envisagée.

Le compteur électrique 2 est typiquement un compteur électrique Linky^{™}, de la société ENEDIS, et l'interface de connexion 24 est une interface TIC via laquelle sont issues les données aptes à être transmises ensuite par le système de communication.

Le système de communication dont l'installation est à réaliser est typiquement un système de communication ERL, tel que la clé Atome commercialisée par la société TOTAL DIRECT ENERGIE. Le système de communication est connu en soi et comporte notamment un émetteur-récepteur apte à envoyer/recevoir des données via un réseau de communication sans fil, notamment à envoyer des données issues du compteur électrique 2 à un utilisateur ou à un serveur distant 6 connecté via une liaison, par exemple filaire, au réseau Internet 8, afin d'aider l'utilisateur à gérer la consommation électrique globale associée à ce compteur électrique 2, ainsi que celle de différents équipements électriques alimentés par ce compteur électrique 2.

Il est donc nécessaire, pour que le système de communication puisse fonctionner correctement une fois installé sur le compteur électrique 2, qu'une connexion sans fil de qualité suffisante puisse être établie par ce système de communication.

Le dispositif électronique de contrôle 3 est configuré pour déterminer si un système de communication qui serait installé sur le compteur électrique 2 serait apte à établir une télécommunication sans fil de qualité suffisante avec la box Wi-Fi 7 de l'utilisateur.

Dans l'exemple de la figure 1, le dispositif électronique de contrôle 3 comprend un module d'émission et de réception Wi-Fi 30, un module d'interface homme-machine 31, un capteur d'images 32 et un module électronique de contrôle 33.

Le module d'émission et de réception Wi-Fi 30 est adapté pour établir une liaison Wi-Fi 5 avec la box Internet 7.

Le module d'interface homme-machine 31 comprend une interface d'acquisition de données en provenance de l'utilisateur, par exemple un clavier, par exemple un clavier tactile et une interface de restitution de données à l'utilisateur, par exemple un écran d'affichage.

Dans un mode de réalisation considéré, le dispositif de contrôle 3 est par exemple embarqué au sein d'un téléphone mobile ou ordiphone (de l'anglais *smartphone*), comme représenté sur la figure 1, qui est adapté pour établir directement avec le réseau internet 8 une liaison sans fil 21, par exemple de type 3G ou 4G.

En variante, le dispositif de contrôle 3 est embarqué au sein d'une tablette électronique ou d'un ordinateur.

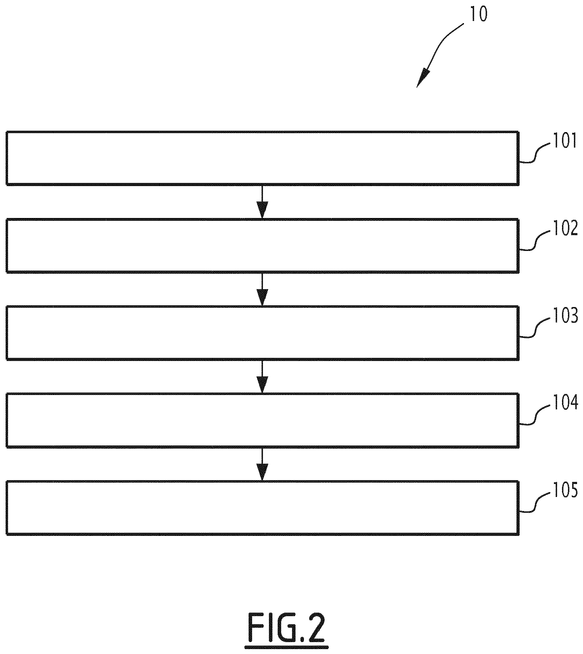

Dans un mode de réalisation, le module de contrôle 33 comprend une mémoire et un processeur (non représentés) et est réalisé sous forme d'un logiciel stocké dans la mémoire, et qui, lorsqu'il est exécuté par le processeur, met en œuvre l'ensemble 10 d'étapes décrites ci-dessous comme lui incombant, en référence à la figure 2.

Le module de contrôle 33 est ainsi adapté pour réaliser les opérations décrites ci-dessous en référence à la figure 2 et lui incombant.

En référence à la figure 2, les étapes suivantes sont mises en œuvre dans un mode de réalisation de l'invention.

Dans une étape 101, le module de contrôle 33 d'un utilisateur souhaitant qu'un système de communication puisse être installé sur son compteur électrique 2 (via l'interface 24) transmet à l'utilisateur une indication, via l'interface-homme machine 31 du module de contrôle 3, par exemple intégré à son téléphone portable, de se connecter à son réseau local Wi-Fi (
dans un mode de réalisation, l'utilisateur a préalablement téléchargé sur son téléphone l'application d'installation d'un système de communication qui s'exécute alors en local via le module de contrôle 33).

L'utilisateur commande alors, via l'interface-homme machine 31 du module de contrôle 3, une connexion Wi-Fi avec la box 7, ce qui déclenche l'établissement, piloté par le module de contrôle 33, de la liaison 5 par échange entre le module d'émission et de réception Wi-Fi 30 et la box Wi-Fi 7.

Puis dans une étape 102, le module de contrôle 33 transmet à l'utilisateur une requête, via l'interface-homme machine 31, de capturer une image du compteur électrique. Optionnellement, la requête indique que l'image devra être prise à moins de m mètres du compteur (avec m valeur comprise par exemple dans la plage [0 cm - 2 m]). L'utilisateur se dirige alors à proximité du compteur électrique 2, oriente le dispositif de contrôle 3 de manière à ce qu'une image ainsi prise par le capteur d'image 32 puisse montrer le compteur électrique, éventuellement l'utilisateur règle la valeur de zoom du capteur d'images 32. Dans un mode de réalisation, un cadre est affiché sur l'interface homme-machine de capture d'image : l'utilisateur place alors le compteur à l'intérieur du cadre, permettant une capture correcte du compteur. L'utilisateur commande alors au module de contrôle 33, via l'interface-homme machine 31, une capture d'image.

Le module de contrôle 33, simultanément au déclenchement de la capture d'image dès réception de cette commande, déclenche la détermination de la qualité courante de la liaison Wi-Fi 5.

Suivant les modes de réalisation, la qualité courante est représentée par un ratio de signal sur bruit (SNR) sur la liaison 5, ou encore par une puissance du signal utile sur la liaison 5 ; elle est fournie par le module d'émission et de réception Wi-Fi 30, ou encore elle est déduite par le module de contrôle 33 à partir d'une information affichée sur l'écran de l'interface homme-machine 31 (par exemple d'un nombre de barres courant indiquant un niveau de champ Wi-Fi), ou encore le module de contrôle 33 requiert via l'interface homme-machine 31, que l'utilisateur saisisse via l'interface homme-machine 31, le nombre de barres de champ alors affiché sur l'écran et utilise ce nombre.

Puis le module de contrôle 33 stocke, dans une mémoire du dispositif de contrôle 3, l'image capturée, la qualité courante déterminée, ainsi qu'optionnellement le niveau de zoom utilisé pour la capture de l'image.

Dans un mode de réalisation, ces informations sont en outre transmises par le module de contrôle 33, via le module d'émission et de réception Wi-Fi 30, à destination du serveur 6, i.e. en empruntant la liaison Wi-Fi 5, puis le réseau internet 7 ; le serveur 6 les stocke en correspondance les unes des autres.

Dans une étape 103, le module de contrôle 33 compare la qualité courante de la liaison Wi-Fi déterminée à l'étape 102 à un seuil prédéterminé (correspondant à la qualité minimale acceptable, d'après expérimentation et prédiction, pour que le service puisse être rendu dans de bonnes conditions). Par exemple, dans un mode de réalisation, le seuil est une quantité de niveau de champ Wi-Fi, par exemple entre 3 et 4 des barres de champ de réseau Wi-Fi affiché sur un écran de téléphone portable. Dans un mode de réalisation, le seuil est une valeur supérieure ou égale à 70 dBm.

Dans un mode de réalisation, les seuils sont fonction du système d'exploitation utilisé (ex : Android^{®}, IOS^{®} ...) par le module de contrôle 33.

Dans un autre mode de réalisation, cette étape 103 est à la place effectuée à distance, par exemple dans le serveur 6.

Dans une étape 104, le module de contrôle 33 transmet à l'utilisateur une indication, via l'interface-homme machine 31, que l'installation d'un système de communication peut effectivement être poursuivie, ou au contraire que cette installation ne peut pas être poursuivie, en fonction de la comparaison effectuée à l'étape 103.

Ainsi si la qualité courante de la liaison Wi-Fi est inférieure au seuil prédéterminé, l'installation est indiquée comme stoppée et si la qualité courante de la liaison Wi-Fi est supérieure ou égale au seuil prédéterminé, l'installation est indiquée comme poursuivie.

Dans un mode de réalisation, si le niveau de zoom utilisé pour la capture d'image est supérieur à un seuil prédéterminé de niveau de zoom, il est également indiqué que cette installation ne peut pas être poursuivie.

Dans une étape 105, lorsqu'il a été indiqué que l'installation peut être poursuivie, les étapes ultérieures d'installation sont mises en œuvre, comprenant l'envoi du système de communication chez l'utilisateur, puis une fois que ce dernier a connecté le système de communication au compteur électrique 2, la mise en œuvre de sa configuration via une liaison Wi-Fi établie avec la box Internet 7.

S'il a été indiqué que l'installation ne peut être poursuivie, aucune de ces étapes n'est déclenchée.

La présente invention permet ainsi de proposer une solution, dans le cadre de la mise en œuvre d'une installation d'un système de communication aux bornes d'un compteur électrique, permettant de s'assurer que le niveau du signal Wi-Fi au niveau du compteur est suffisant pour que ce système de communication puisse rendre son service, en guidant selon l'invention, les utilisateurs auprès de leur compteur électrique et en obtenant une mesure de la qualité du signal Wi-Fi au niveau de ce compteur, permettant de déterminer leur éligibilité au service. L'invention dans un mode de réalisation permet le cas échéant de n'envoyer donc les systèmes de communication qu'aux utilisateurs pour lesquels il a été déterminé que ce niveau de signal est suffisant.

Une fois le système de communication installé sur le compteur électrique 2 et connecté à la box Internet 7 via Wi-Fi, si l'utilisateur conteste la bonne marche du système de communication, il est possible soit d'éluder la cause d'un problème de puissance Wi-Fi soit de déterminer si cela est dû au fait que le signal Wi-Fi n'est pas de qualité suffisante et que cela n'a pas été détecté parce que l'utilisateur n'était pas à proximité de son compteur lors du contrôle : pour cela, il suffit de déterminer, par exemple de manière automatique, par traitement d'image par le serveur 6, à partir de l'image capturée par l'utilisateur et stockée dans le serveur 6, si ladite image correspond bien à une position de capture d'un compteur électrique à proximité suffisante du compteur électrique 2 (ie par exemple à moins de m mètres).

En variante non représentée, le module de contrôle 33 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le module de contrôle 33 est réalisé sous forme d'un logiciel, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

Dans le mode de réalisation considéré, la connexion sans fil dont la qualité est vérifiée selon l'invention était celle mise en œuvre par la box 7 de l'utilisateur destinée à supporter les échanges avec le système de communication à installer. Dans d'autres modes de réalisation, le système de communication utilisera une autre liaison de télécommunication sans fil, par exemple de type 3G, 4G, 5G, NBIoT (en anglais « Narrowband Internet of Things ») et c'est alors, selon l'invention, la qualité de la liaison sans fil selon cette norme au niveau du compteur électrique qui sera évaluée comme suffisante ou non, par comparaison à un seuil prédéterminé.

## Revendications

1. Procédé de contrôle pour déterminer la possibilité de la mise en œuvre d'un système de communication pour un compteur électrique (2), ledit système de communication étant adapté pour être connecté au compteur électrique et pour transmettre à un utilisateur des données issues du compteur électrique via un réseau de télécommunications sans fil, ledit procédé étant exécuté par un dispositif électronique de contrôle (3) comprenant un capteur d'images (32) et étant **caractérisé en ce qu'**il comprend les étapes suivantes :
connexion du dispositif électronique de contrôle au réseau de télécommunication sans fil ;
fourniture à l'utilisateur, via le dispositif électronique de contrôle, d'une requête de capture d'une image du compteur électrique ;
sur réception d'une commande de capture d'image en provenance de l'utilisateur par le dispositif électronique de contrôle, déclenchement d'une capture d'image par le capteur d'image et d'une détermination, par le dispositif électronique de contrôle, d'au moins une valeur indiquant une qualité courante de la connexion (5) avec le réseau de télécommunication sans fil ;
délivrance à l'utilisateur, par le dispositif électronique de contrôle, d'une indication de poursuite de la mise en oeuvre dudit système de communication, ou alternativement d'une indication de l'impossibilité de la poursuite d'une telle mise en œuvre, en fonction du résultat d'une comparaison entre ladite qualité déterminée et un seuil de qualité prédéterminé.

2. Procédé de contrôle pour déterminer la possibilité de la mise en œuvre d'un système de communication pour un compteur électrique (2) selon la revendication 1, comprenant la comparaison entre ladite qualité déterminée et un seuil de qualité prédéterminé, et la détermination que la mise en œuvre du système de communication peut être poursuivie, ou alternativement de l'impossibilité de la poursuite d'une telle mise en œuvre, en fonction du résultat de ladite comparaison.

3. Procédé de contrôle pour déterminer la possibilité de la mise en œuvre d'un système de communication pour un compteur électrique (2) selon la revendication 1 ou 2, selon lequel ladite capture d'image par le capteur d'image et ladite détermination de qualité courante de connexion sont déclenchées simultanément.

4. Procédé de contrôle pour déterminer la possibilité de la mise en œuvre d'un système de communication pour un compteur électrique (2) selon l'une des revendications précédentes, selon lequel ladite image capturée et ladite qualité déterminée sont transmises par ledit dispositif électronique de contrôle (3) à destination d'un serveur central (6) pour stockage de ladite image en correspondance de ladite qualité.

5. Procédé de contrôle pour déterminer la possibilité de la mise en œuvre d'un système de communication pour un compteur électrique (2) selon l'une des revendications précédentes, selon lequel la connexion du dispositif électronique de contrôle (3) au réseau de télécommunication sans fil comprend une connexion selon la norme Wi-Fi à un réseau local et la détermination de la qualité courante de la connexion avec le réseau de télécommunication sans fil comprend la détermination de la qualité courante de ladite connexion selon la norme Wi-Fi.

6. Procédé de contrôle pour déterminer la possibilité de la mise en œuvre d'un système de communication pour un compteur électrique (2) selon l'une des revendications précédentes, selon lequel la délivrance à l'utilisateur, par le dispositif électronique de contrôle (3), de l'indication de poursuite de la mise en œuvre dudit système de communication, ou alternativement d'une indication de l'impossibilité de la poursuite d'une telle mise en œuvre, est en outre fonction d'un niveau de zoom utilisé pour la capture d'image.

7. Programme d'ordinateur comportant des instructions logicielles qui, lorsqu'elles sont exécutées par un ordinateur, mettent en œuvre un procédé selon l'une quelconque des revendications précédentes.

8. Dispositif électronique de contrôle (3) pour déterminer la possibilité de la mise en œuvre d'un système de communication pour un compteur électrique (2), ledit système de communication étant adapté pour être connecté au compteur électrique (2) et pour transmettre à un utilisateur des données issues du compteur électrique via un réseau de télécommunications sans fil (5), ledit dispositif électronique de contrôle comprenant un capteur d'images (32), une interface homme-machine (31) et un module d'émission et de réception de télécommunication sans fil (30) adapté pour se connecter à un réseau de télécommunication sans fil (5), ledit dispositif électronique de contrôle étant adapté pour fournir à l'utilisateur, via l'interface homme-machine, une requête de capture d'une image du compteur électrique et pour, sur réception via l'interface homme-machine, d'une commande de capture d'image en provenance de l'utilisateur, déclencher une capture d'image par le capteur d'image et déterminer une qualité courante de la connexion avec le réseau de télécommunication sans fil avec lequel le dispositif électronique de contrôle est connecté ; ledit dispositif électronique de contrôle étant adapté pour délivrer à l'utilisateur une indication de poursuite de la mise en œuvre dudit système de communication, ou alternativement une indication de l'impossibilité de la poursuite d'une telle mise en œuvre, en fonction du résultat d'une comparaison entre ladite qualité déterminée et un seuil de qualité prédéterminé.

9. Dispositif électronique de contrôle (3) pour déterminer la possibilité de la mise en œuvre d'un système de communication pour un compteur électrique (2) selon la revendication 8, adapté pour comparer ladite qualité déterminée et un seuil de qualité prédéterminé et pour déterminer que la mise en œuvre du système de communication peut être poursuivie, ou alternativement pour déterminer l'impossibilité de la poursuite d'une telle mise en œuvre, en fonction du résultat de ladite comparaison.

10. Dispositif électronique de contrôle (3) pour déterminer la possibilité de la mise en œuvre d'un système de communication pour un compteur électrique (2) selon la revendication 8 ou 9, adapté pour simultanément déclencher la capture d'image par le capteur d'image et déterminer la qualité courante de connexion.
